Europäisches Patentamt

European Patent Office

Office européen des brevets

(11) Veröffentlichungsnummer: **0 183 197**
**B1**

(12) **EUROPÄISCHE PATENTSCHRIFT**

(45) Veröffentlichungstag der Patentschrifft:
17.01.90

(21) Anmeldenummer: 85114805.6

(22) Anmeldetag: 21.11.85

(51) Int. Cl. ⁴: **F 16 F   3/10**, F 16 F   7/10,
**B 60 K   5/12**

(54) Elastisches Motorlager.

(30) Priorität: 26.11.84 DE 3443029

(43) Veröffentlichungstag der Anmeldung:
04.06.86 Patentblatt 86/23

(45) Bekanntmachung des Hinweises auf die Patenterteilung:
17.01.90 Patentblatt 90/03

(84) Bennante Vertragsstaaten:
DE FR GB IT SE

(56) Entgegenhaltungen:
EP-A-0 108 875
DE-A-3 431 324
FR-A-1 142 684
FR-A-2 444 852
US-A-1 917 094
US-A-4 456 213

(73) Patentinhaber: METZELER   Gesellschaft   mit
beschränkter Haftung
Gneisenaustrasse 15
D-8000 München 50 (DE)

(72) Erfinder: Härtel, Volker, Dr.
Fichtenstrasse 50
D-8034 Germering (DE)

(74) Vertreter: Michelis, Theodor, Dipl.-Ing.
Gneisenaustrasse 15
D-8000 München 50 (DE)

LIBERGRAF, STOCKHOLM 1990

### Beschreibung

Die Erfindung bezieht sich auf ein elastisches Motorlager mit frequenzabhängig abnehmender dynamischer Steifigkeit zur Dämpfung von Körperschallübertragungen, mit einem Elastomerlager als Krafteinleitungspunkt und mindestens einer damit gekoppelten gegenschwingenden Masse.

Derartige sogenannte Gegenschwinger sind beispielsweise aus der US-A-4 456 213 und der FR-A-7 835 673 bekannt, bei denen zwischen zwei Gummilagern das eine Ende eines Stabes mit einer zusätzlichen Masse am anderen Ende eingespannt sind. Damit soll ein gewisser Tilgereffekt für gewisse Störfrequenzen, die sich insbesondere akustisch auswirken, geschaffen werden.

Demgegenüber liegt der vorliegenden Erfindung die Aufgabe zugrunde, ein elastisches Motorlager zu schaffen, das symmetrisch aufgebaut ist und dessen wesentlicher Federkörper in weiten Frequenzbereichen auf bei Belastung abnehmende dynamische Steifigkeit eingestellt werden kann und das sehr einfach herzustellen ist.

Zur Lösung dieser Aufgabe ist erfindungsgemäß vorgesehen, daß das Elastomerlager mittig auf einer auf mindestens zwei Auflagerpunkten abgestützten, auf Biegung beanspruchten Blattfeder angeordnet ist und daß die Hilfsmasse von zwei über die Lagerpunkte hinausragenden Enden der Blattfeder gebildet ist.

Die beiden Auflagerpunkte der Blattfeder sind dabei zweckmäßigerweise durch zwei elastisch verformbare Elastomerkörper gebildet, die auf einer gemeinsamen Grundplatte als Widerlager befestigt sind.

Da bei einer Belastung über die mittige Krafteinleitung sich die Feder durchbiegt und durch entsprechende Verformung der als Auflagerpunkte dienenden Elastomerkörper im allgemeinen parabelförmig durchbiegt, führen die Enden der Blattfeder eine der Belastungsrichtung entgegengesetzte Bewegung aus, womit bei dynamischer Beanspruchung ein gegenschwingender Effekt erzielt wird. Die Masse der Blattfederenden, die noch durch das Anbringen zusätzlicher Massen erhöht werden kann, wird also entgegen der jeweiligen Belastungsrichtung beschleunigt und erniedrigt dadurch die auf die Auflager einwirkenden Kräfte, was zu einer frequenzabhängigen Erniedrigung der dynamischen Steifigkeit führt.

Die Blattfeder selbst ist zweckmäßigerweise aus Faserverbundwerkstoff hergestellt und vollflächig mit den jeweiligen Elastomerlagern verbunden.

In Weiterbildung der Erfindung kann ein derartiges Motorlager mit einem Keillager derart kombiniert werden, daß die beiden Auflagerpunkte für die Blattfeder durch den Lagerkern des Keillagers gebildet sind.

Zur Erhöhung des Effektes der gegenschwingenden Massen ist ferner ein spiegelsymmetrischer Aufbau möglich derart, daß beiderseits der beiden als Auflagerpunkte dienenden Elastomerkörper je eine Blattfeder mit einem mittigen Krafteinleitungs- bzw. Widerlagerpunkt angeordnet sind.

Zur Erreichung des gleichen Effektes kann aber auch die Blattfeder sternförmig mit mehreren sich vom Krafteinleitungspunkt radial nach außen erstreckenden Federarmen ausgebildet sein, die sich auf einem ringförmigen Elastomerauflager abstützen.

Anhand einer schematischen Zeichnung sind Aufbau und Wirkungsweise von Ausführungsbeispielen nach der Erfindung näher erläutert. Dabei zeigen:

Fig. 1 A  ein elastisches Motorlager mit einer Blattfeder in prinzipieller Darstellung,
Fig. 1 B  das gleiche Lager im belasteten Zustand,
Fig. 2  ein derartiges Lager in Kombination mit einem herkömmlichen Keillager,
Fig. 3  ein Motorlager mit zwei spiegelbildlich angeordneten Blattfedern und
Fig. 4  ein Motorlager mit einer sternförmig ausgebildeten Blattfeder.

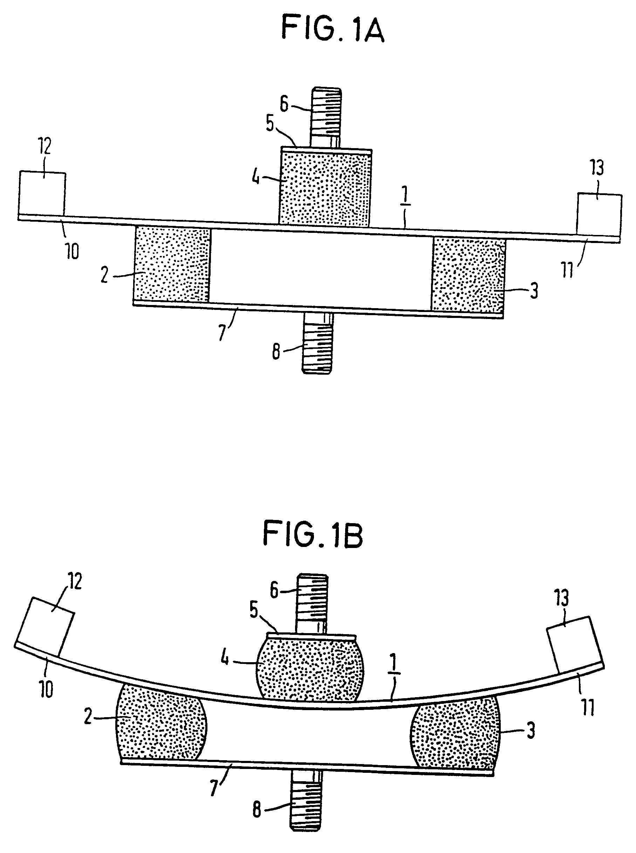

Wie aus Fig. 1 A zu ersehen ist, besteht das Motorlager im wesentlichen aus einer Blattfeder 1, die auf zwei Punkten in Form der elastisch verformbaren Elastomerkörper 2 und 3 gelagert ist, und eine mittige Krafteinleitung in Form eines weiteren Elastomerlagers 4 aufweist. Dieses Elastomerlager 4 ist haftend mit einer Metallplatte 5 verbunden, die beispielsweise einen Schraubbolzen 6 zum Anschluß des abzustützenden Motors trägt. Die beiden als Auflagerpunkte dienenden Elastomerkörper 2 und 3 sind über eine Grundplatte 7 miteinander verbunden, die als Widerlager zur zentralen Abstützung dient und beispielsweise Schraubbolzen 8 zur Montage aufweisen kann.

Die Blattfeder 1 kann aus herkömmlichen metallischen Federwerkstoffen gefertigt sein, vorteilhafter jedoch ist die Verwendung von Faserverbundwerkstoffen mit Glas- oder Kohlefasern, wobei diese Blattfeder 1 großflächig mit den Elastomerlagern 2, 3 und 4 verbunden ist, um lebensdauer-verkürzende Spannungsspitzen zu vermeiden.

Die Blattfeder 1 ragt mit ihren Enden 10 und 11 über die beiden Elastomerauflager 2 und 3 hinaus. Bei einer Belastung und damit einer Krafteinleitung über das Elastomerlager 4 biegt sich die Blattfeder 1 nach unten durch, wobei die beiden Federenden 10 und 11 eine der Belastungsrichtung entgegengesetzte Bewegung ausführen, wie das deutlich aus Fig. 1 B zu ersehen ist. Die beiden Elastomerlager 2 und 3 drücken sich gleichzeitig entsprechend ihrer Federkennwerte zusammen, ermöglichen jedoch eine parabelförmige Durchbiegung der Blattfeder 1, indem sie sich an den Innenseiten stärker und an den Außenseiten weniger stark verformen. Die Abstimmung der Federraten wird dabei zweckmäßigerweise so vorgenommen, daß die Elastomerkörper bei Belastung an ihren Außenseiten nicht in den Zugbereich kommen. Die über die Elastomerkörper 2 und 3 hinausragenden Enden 10 und 11 der Blattfeder bewirken dann bei dynamischer Beanspruchung einen gegenschwingenden Effekt. Ihre Masse wird entgegen der jeweiligen Belastungsrichtung beschleunigt und erniedrigt dadurch die auf die Elastomerlager 2 und 3 einwirkenden Kräfte, wodurch eine frequenzabhängige Erniedrigung der dynamischen Steifigkeit herbeigeführt wird.

Eine Verstärkung dieses Effektes läßt sich dadurch erreichen, indem an den Enden 10 und 11 der Blattfeder 1 zusätzliche Massen 12 und 13 angeordnet werden. Über die Parameter Biegesteifigkeit, Masse und Länge der Federenden 10 und 11 läßt sich dabei der Frequenzbereich, für den die dynamische Steifigkeit des Motorlagers unter der statischen Steifigkeit liegt, genau einstellen.

Neben dieser Einstellung des Steifigkeitsverlaufes kann aber auch die Gesamtdämpfung des Systems durch entsprechende Auswahl von Elastomersorten mit hoher Dämpfung eingestellt werden, wohingegen derartige Blattfedern aus Stahl oder Faserverbundwerkstoffen nur eine sehr geringe Eigendämpfung besitzen.

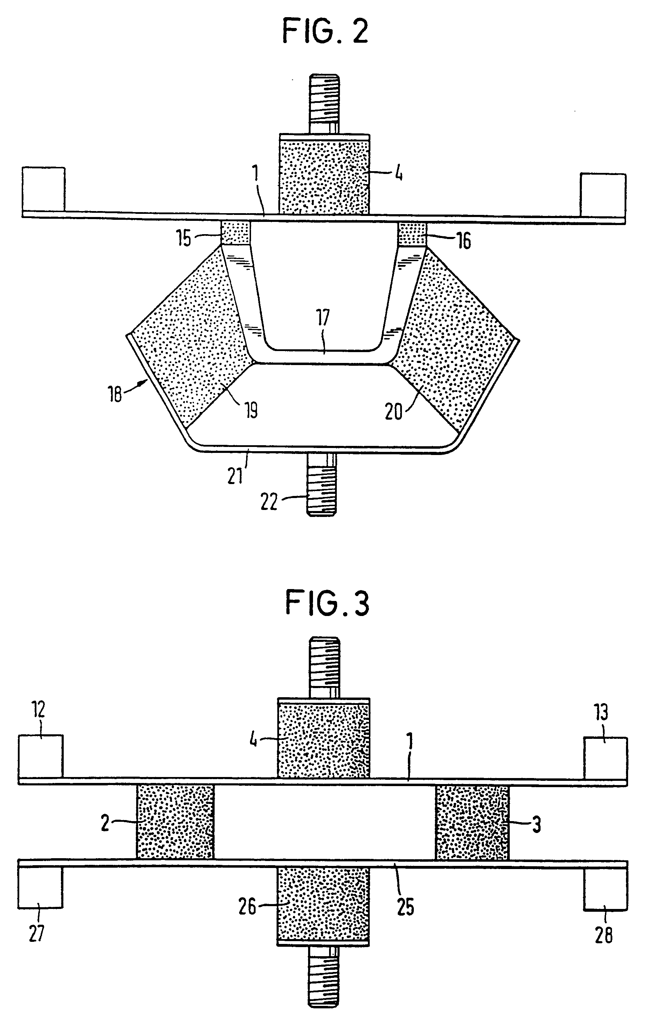

Ein derartiges Motorlager läßt sich leicht mit anderen elastischen Lagern koppeln, wie das in Fig. 2 am Beispiel der Kombination mit einem herkömmlichen Keillager gezeigt ist. Dabei dienen als Auflagerpunkte für die Blattfeder 1 der über Elastomerkörper 15 und 16 angeschlossene U-förmige Lagerkern 17 eines Keillagers 18, wobei über die beiden keilförmig an den Kern 17 angeschlossenen Gummikörper 19 und 20 eine Abstützung über den Bügel 21 und den Befestigungspunkt 22 erfolgt.

Zur Verstärkung des Effektes der gegenschwingenden Massen ist ein Aufbau des elastischen Motorlagers möglich, wie es in dem Ausführungsbeispiel nach Fig. 3 gezeigt ist. Dabei sind spiegelbildlich zu den beiden als Auflagerpunkte dienenden Elastomerkörpern 2 und 3 zwei Blattfedern 1 und 25 mit einem mittigen Elastomerlager 4 als Krafteinleitungspunkt, und einem weiteren Elastomerlager 26 mittig zur unteren Blattfeder 25 als Widerlager und Befestigungspunkt. Auch hierbei sind die Blattfederenden mit zusätzlichen Massen 12 und 13 bzw. 27 und 28 verbunden, so daß bei einer dynamischen Belastung über das Elastomerlager 4 und einer Annäherung der beiden Elastomerkörper 4 und 26 bei entsprechender Durchbiegung der Blattfedern 1 und 25 sich die Massen 12 und 13 bzw. 27 und 28 in Gegenphase zur eingeleiteten Kraftrichtung bewegen und damit eine weitere Absenkung der dynamischen Steifigkeit bewirken.

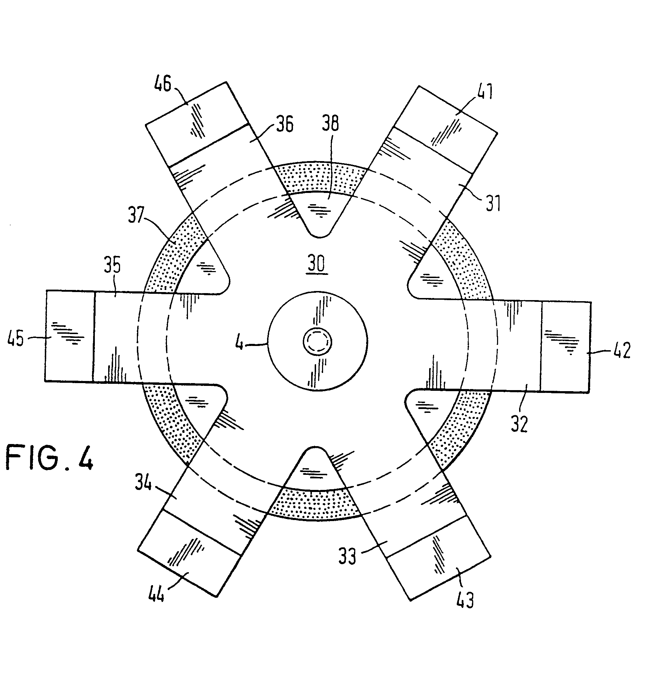

In Fig. 4 ist eine weitere Ausführungsform mit einer sternförmigen Ausbildung der Blattfeder 30 dargestellt. Dabei gehen vom zentralen Bereich des Krafteinleitungs-Elastomerlagers 4 sechs sich radial nach außen erstreckende Federarme 31 - 36 aus, die an ihren Enden noch mit zusätzlichen Massen 41 - 46 belastet sind. Diese sternförmige Blattfeder 30 wird dabei von einem ringförmig ausgebildeten Elastomerauflager 37 abgestützt, das von einer kreisscheibenförmigen Grundplatte 38 getragen ist. Bei einer Belastung in senkrechter Richtung auf die Darstellungsebene führen die Federarme 31 - 36 mit ihren Massen 41 - 46 Bewegungen nach oben, d. h. wie ein nach außen umklappender Regenschirm, aus. Auch mit einer derartigen Ausführungsform ist eine Verstärkung des Effektes der gegenschwingenden Massen möglich.

Der wesentliche Vorteil aller Ausführungsformen nach den dargestellten Ausführungsbeispielen ist der einfache Aufbau und eine weitgehende Abstimmungsmöglichkeit des Frequenzbereiches, die sich aus der Kombination der Materialeigenschaften von Gummi und faserverstärkten Blattfedern ergibt. Durch die großflächige Krafteinleitung über die Elastomerblöcke werden Spannungsspitzen vermieden und die dynamische Lebensdauer dieser Bauteile erheblich verbessert. Die Elastomerblöcke übernehmen hier gleichzeitig die Funktion von Federn, von Auflagern und von spielfreien Gelenken.

Bei entsprechender Abstimmung ist es möglich, einen Anstieg der Steifigkeit, der jenseits des Steifigkeitsminimums durch die nunmehr überwiegenden Massenkräfte hervorgerufen wird, weitgehend zu vermeiden, oder ihn in einen nicht mehr störenden Frequenzbereich zu verschieben. Zu diesem Zweck werden die über über die Auflager hinausragenden Federzungen in ihrer Steifigkeit und Massenverteilung so ausgelegt, daß ihre erste Biegeeigenresonanz in diesem Bereich liegt, d. h. die Zunge wird bei diesen Frequenzen zu Eigenschwingungen angeregt und wirkt nun wie ein in Resonanz befindlicher Tilger, der den steilen Steifigkeitsanstieg noch einmal kompensiert. Die Zunahme der Steifigkeit erfolgt dann in einem für das jeweilige Schwingungsproblem nicht mehr relevanten Frequenzbereich, d. h. etwa bei 4 Zylinder Otto-Motoren in Frequenzbereichen, die über 200 Hz liegen.

## Patentansprüche

1. Elastisches Motorlager mit frequenzabhängig abnehmender dynamischer Steifigkeit zur Dämpfung der Körperschallübertragung, bestehend aus einem zur Krafteinleitung dienenden Elastomerlager und mindestens einer damit gekoppelten Hilfsmasse, die entgegen der Krafteinleitungsrichtung schwingt, dadurch gekennzeichnet, daß das Elastomerlager mittig auf einer auf mindestens zwei Auflagerpunkten (2, 3) abgestützten, auf Biegung beanspruchten Blattfeder (1) angeordnet ist und daß die Hilfsmasse von frei über die Lagerpunkte (2, 3) hinausragenden Enden (10, 11) der Blattfeder (1) gebildet ist.

2. Elastisches Motorlager nach Anspruch 1, dadurch gekennzeichnet, daß die Auflagerpunkte der Blattfeder (1) durch zwei elastisch verformbare Elastomerkörper (2, 3) gebildet sind, die auf einer gemeinsamen Grundplatte (7) als Widerlager befestigt sind.

3. Elastisches Motorlager nach Anspruch 1 oder 2, dadurch gekennzeichnet, daß an den freien Enden (10, 11) der Blattfeder (1) zusätzliche Massen (12, 13) angeordnet sind.

4. Elastisches Motorlager nach Anspruch 3, dadurch gekennzeichnet, daß die Blattfeder (1) aus Faserverbindwerkstoff besteht.

5. Elastisches Motorlager nach Anspruch 1 bis 4, dadurch gekennzeichnet, daß die beiden Auflagerpunkte für die Blattfeder (1) durch den Lagerkern (17) eines an sich bekannten Gummi-Metall-Keillagers (18) gebildet sind.

6. Elastisches Motorlager nach Anspruch 1 bis 4, gekennzeichnet durch einen spiegelsymmetrischen Aufbau derart, daß beiderseits der beiden als Auflagerpunkte dienenden Elastomerkörper (2, 3) je eine Blattfeder (1, 25) mit je einem mittig darauf angeordneten Elastomerlager als Krafteinleitungs- bzw. Widerlagerpunkt (2, 26) angeordnet sind.

7. Elastisches Motorlager nach Anspruch 1 bis 4, dadurch gekennzeichnet, daß die Blattfeder (30) sternförmig mit mehreren, sich von einem Krafteinleitungspunkt (4) radial nach außen erstreckenden Federarmen (31...36) ausgebildet ist, die sich auf einem ringförmigen Elastomerkörper (37) abstützen.

8. Elastisches Motorlager nach einem der Ansprüche 1 bis 7, dadurch gekennzeichnet, daß das Elastomerlager (4) und die Elastomerkörper (2, 3) vollflächig mit der Blattfeder (1; 25; 30) verbunden sind.

## Claims

1. Elastic engine mount having dynamic stiffness decreasing as a function of frequency for damping sound transmitted through solids, comprising an elastomer support serving to transmit force and at least one auxiliary mass coupled with it, which auxiliary mass vibrates in a direction opposite to the force transmission, characterised in that the elastomer support is arranged centrally on a leaf spring (1) loaded by bending and supported on at least two support points (2, 3), and in that the auxiliary mass is formed by ends (10, 11) of the leaf spring (1) projecting freely over the support points (2, 3).

2. Elastic engine mount according to claim 1, characterised in that the support points of the leaf spring (1) are formed by two resiliently deformable elastomer bodies (2, 3) which are attached to a common base plate (7) as an abutment.

3. Elastic engine mount according to claim 1 or 2, characterised in that additional masses (12, 13) are arranged at the free ends (10, 11) of the leaf spring (1).

4. Elastic engine mount according to claim 3, characterised in that the leaf spring (1) consists of fibre compound material.

5. Elastic engine mount according to claim 1 to 4, characterised in that the two support points for the leaf spring (1) are formed by the support core (17) of a rubber-metal wedge support (18) known per se.

6. Elastic engine mount according to claim 1 to 4, characterised by a mirror-image construction such that one leaf spring (1, 25) having one elastomer support arranged centrally thereon to act as force transmitting point or abutment point (2, 26), is disposed on each side of the two elastomer bodies (2, 3) serving as support points.

7. Elastic engine mount according to claim 1 to 4, characterised in that the leaf spring (30) is formed in the shape of a star having several spring arms (31 - 36) which are supported on a ring-shaped elastomer body (37) and extend radially outwards from a force transmission point (4).

8. Elastic engine mount according to one of claims 1 to 7, characterised in that the elastomer support (4) and the elastomer bodies (2, 3) are connected with full contact surface to the leaf springs (1; 25; 30).

## Revendications

1. Support élastique de moteur, à raideur dynamique décroissante en fonction de la fréquence, pour atténuer la transmission du bruit solidien, constitué d'un support en élastomère servant à l'application d'une force et d'au moins une masse auxiliaire qui lui est accouplée et qui oscille dans le sens opposé à celui de la force appliquée, caractérisé en ce que le support en élastomère est monté en position médiane sur un ressort à lame (1) sollicité en flexion et portant sur au moins deux points d'appui (2, 3), et en ce que la masse auxiliaire est formée par les extrémités (10, 11) du ressort à lame (1) qui s'étendent librement au-delà des points d'appui (2, 3).

2. Support élastique de moteur suivant la revendication 1, caractérisé en ce que les points d'appui du ressort à lame (1) sont formés de deux corps en élastomère (2, 3) déformables élastiquement, qui sont fixés sur une plaque de base (7) commune servant de contre-appui.

3. Support élastique de moteur suivant la revendication 1 ou 2, caractérisé en ce qu'aux extrémités libres (10, 11) du ressort à lame (1) sont montées des masses supplémentaires (12, 13).

4. Support élastique de moteur suivant la revendication 3, caractérisé en ce que le ressort à lame (1) est en un matériau composite fibreux.

5. Support élastique de moteur suivant l'une des revendications 1 à 4, caractérisé en ce que les deux points d'appui du ressort à lame (1) sont formés par l'âme (17) d'une cale (18) cunéiforme caoutchouc-métal, connue en soi.

6. Support élastique de moteur suivant l'une des revendications 1 à 4, caractérisé par une structure à symétrie de réflexion de manière à avoir, de part et d'autre des deux corps en élastomère (2, 3) servant de points d'appui, respectivement un ressort à lame (1, 25) ayant, comme point d'application d'une force et comme point de contre-appui (4, 26), respectivement un support en élastomère en position médiane.

7. Support élastique de moteur suivant l'une des revendications 1 à 4, caractérisé en ce que le ressort à lame (30) est en forme d'étoile, ayant plusieurs bras élastiques (31...36) s'étendant radialement vers l'extérieur depuis un point d'application d'une force (4) et s'appuyant sur un corps en élastomère (37) annulaire.

8. Support élastique de moteur suivant l'une des revendications 1 à 7, caractérisé en ce que le support en élastomère (4) et les corps en élastomère (2, 3) sont reliés par toute la surface aux ressorts à lame (1; 25; 30).

## FIG. 1A

## FIG. 1B

# FIG. 2

# FIG. 3

FIG. 4